**Europäisches Patentamt**

**European Patent Office**

**Office européen des brevets**

(11) Publication number: **0 158 791**
**B1**

# (12) EUROPEAN PATENT SPECIFICATION

(45) Date of publication of patent specification: **26.04.89**

(21) Application number: **85101966.1**

(22) Date of filing: **22.02.85**

(51) Int. Cl.⁴: **G 21 C 7/10, G 21 C 3/16**

(54) An improved control rod assembly for a nuclear reactor fuel assembly.

(30) Priority: **23.03.84 US 592984**

(43) Date of publication of application:
**23.10.85 Bulletin 85/43**

(45) Publication of the grant of the patent:
**26.04.89 Bulletin 89/17**

(84) Designated Contracting States:
**BE DE FR GB SE**

(56) References cited:
**FR-A-2 045 788**
**FR-A-2 162 286**
**GB-A-1 225 947**
**US-A-3 804 708**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Francis, Trevor Andrew**
**504 Green Haven Ct.**
**Pittsburgh Pennsylvania 15239 (US)**

(74) Representative: **Patentanwälte Dipl.-Ing. R.**
**Holzer Dipl.-Ing. (FH) W. Gallo**
**Ludwigstrasse 26**
**D-8900 Augsburg (DE)**

Courier Press, Leamington Spa, England.

## Description

The invention relates generally to nuclear reactors and, more particularly, to a rod assembly for use with a nuclear fuel assembly.

In most nuclear reactors, the core portion of the reactor comprises a large number of elongate fuel rods grouped and supported in frameworks called fuel assemblies which receive support and alignment from upper and lower transversely extending core support plates. In conventional fuel assemblies, fuel rods and control rod guide thimbles are held in an organized array by means of grids spaced apart along the fuel assembly and attached to the guide thimbles. Top and bottom nozzles at opposite ends of the fuel assembly are secured to the guide thimbles. Generally, in most reactors, a liquid coolant, such as water, is directed upward through apertures in the lower core support plate and along the various fuel assemblies to receive thermal energy therefrom.

One method of controlling the reactivity within a reactor core is by moving neutron absorbing elements, commonly referred to as control rods, into and out of the core region. One arrangement utilizing control rods in association with a fuel assembly is disclosed in U.S. Patent Specification No. 4,326,919 showing a fixed array of control rods supported at their upper ends by a spider assembly which, in turn, is connected to a control-rod drive mechanism operable to raise and lower (referred to as a stepping action) the control rods in their guide thimbles. A typical construction of a rod element is disclosed in US—A—3 804 710 and comprises an elongate metallic tube or cladding containing a stack of ceramic pellets and having its opposite ends sealed with end plugs. The pellets are stacked within the cladding tube through part of its length so as to leave a space between the stack of pellets and the upper end plug. This space serves as a plenum chamber for receiving gases generated during operation. In order to hold the stack of pellets firmly packed together, the stack is usually spring-loaded by means of a pressure or coil spring disposed in the plenum chamber and bearing against the uppermost pellet of the stack through a load distributing member. Furthermore, in order to prevent rupture of the cladding due to internal pressure build-up of the gases, the design volume of the plenum chamber must be sufficient to accommodate the gases without exceeding a predetermined safe pressure level. However, finding the right design volume requires that a determination first be made as to exactly what pressure levels the generated gases will attain under all operating conditions, a task which is extremely difficult to achieve due to the many different absorber materials and hybrid combinations thereof used. The same problems as mentioned above in conjunction with control rods may be encountered also with nuclear fuel rods which are of similar construction except that their neutron reactive pellets consist of nuclear fuel instead of a neutron absorbing material.

The invention has for its principal object to provide an improved assembly which does not pose the above-mentioned problems.

The invention accordingly resides in a rod assembly for use in a nuclear reactor, as described in claim 1.

With the above arrangement employing an auxiliary chamber in gas-flow communication with the plenum chamber, the amount of gas is substantially increased which can be accommodated without the risk of rupture of the cladding tube. The tubular cladding member has disposed therein a tubular insert which extends in reinforcing relationship with respect to the adjacent side walls of the cladding member from said other end plug for at least the length of the auxiliary chamber. The spring-seat forming means as well as the spring-load distributing member may be a disc-like member with a gas-flow passage therethrough, such disc-like configuration being conducive to keeping the ends of the pressure spring in their proper shape and positions.

A preferred embodiment of the invention will now be described, by way of example only, with reference to the accompanying drawings, in which:

Figure 1 is an elevational and partly cross-sectional view showing a fuel assembly in vertically foreshortened form and with parts thereof broken away for clarity; and

Figure 2 is an enlarged, vertically sectional view of a control rod embodying the invention.

In the following description, like reference numerals will be used to designate like or corresponding parts in both views, and terms such as "forward", "rearward", "left", "right", "upwardly", "downwardly", and the like, are employed as words of convenience not to be construed as limiting terms.

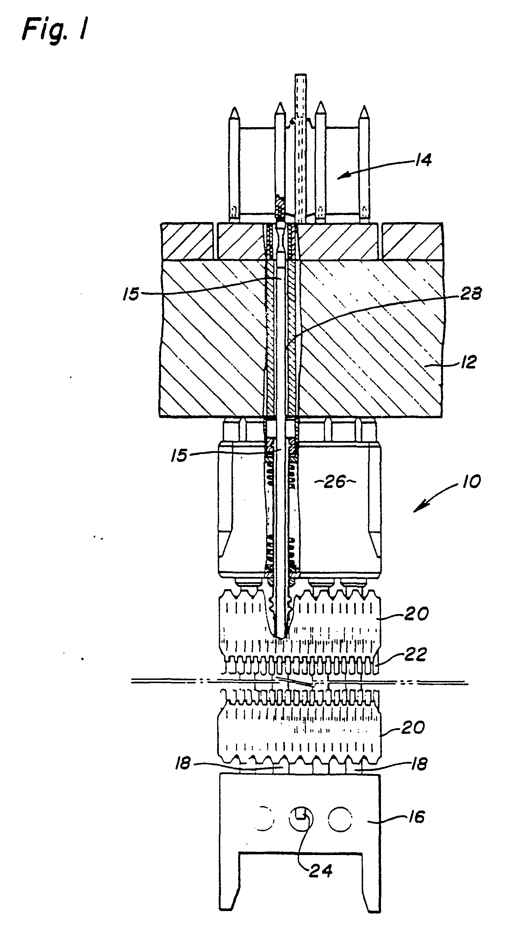

Referring now to the drawings, and particularly to Figure 1, there is shown an overall combination (interface) of a fuel assembly generally designated with numeral 10, an upper core support plate 12 disposed above and extending across the fuel assembly 10, and a spider assembly 14 supporting a fixed array of control rods, only one of which is shown at 15.

The fuel assembly 10 basically comprises a lower end structure or bottom nozzle 16 for supporting the assembly on a lower core plate (not shown) in the core region of a reactor (not shown); a number of elongate guide tubes or thimbles 18 projecting longitudinally upward from the bottom nozzle 16; a plurality of transverse grids 20 axially spaced apart along the guide thimbles 18; an organized array of elongate fuel rods 22 transversely spaced apart and supported by the grids 20; an instrumentation tube 24 located in the center of the assembly; and an upper end structure or top nozzle 26 attached to the upper ends of the guide thimbles 18 to form an integral assembly capable of being conventionally handled without damaging the assembly components. Since the fuel assembly 10 generally does not form part of the invention and

is shown herein only for the purpose of illustration, it need not be described herein in further detail.

The upper core support plate 12 extends across the top of the shown fuel assembly 10 and also across the tops of the other fuel assemblies (not shown) arranged within the core. Since the support plate 12 is conventional, suffice it to say that it has a multiplicity of flow openings, such as flow passages 28, which allow coolant to pass upwardly through the core, and that at least some of these passages are axially aligned with the guide thimbles 18 to enable control rods 15 to be inserted into the guide thimbles 18 of fuel assembly 10 through the respective passages 28 in the plate 12.

The spider assembly 14 has the upper ends of the control rods 15 connected thereto, and it supports the control rods for vertical movement within the guide thimbles 18 effected by means of a conventional drive mechanism (not shown). The spider assembly 14 itself likewise forms no part of the invention per se, wherefore it will not be further described herein. It should be noted, however, that the spider assembly, although shown herein as disposed above the core plate 12 upon which it will rest when the control rods 15 are fully inserted in the guide thimbles 18, in some known arrangements is located between the bottom of the core plate and the top of the fuel assembly.

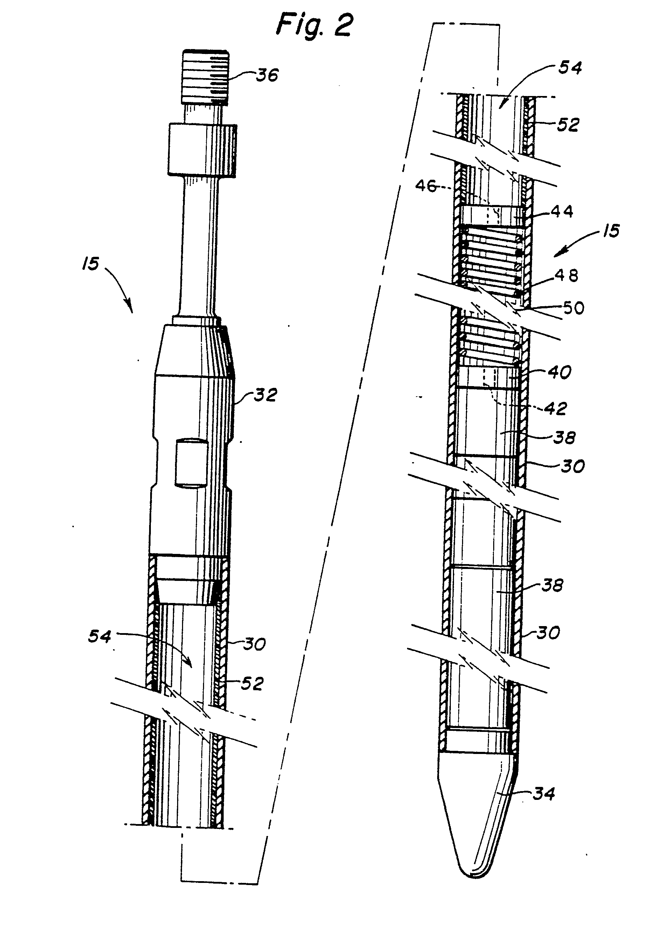

The control rod assembly 15 embodying the invention, now to be described in detail with particular reference to Figure 2, includes an elongate, relatively thin-walled, metallic cladding or tube 30 having its opposite ends sealed by means of end plugs 32 and 34. The upper end plug 32 has formed integral therewith an upwardly extending stem section with an externally threaded end portion 36 for threaded connection of the control rod assembly to the spider assembly 14. The lower end plug 34 is cone-shaped.

Slidably disposed within tube 30 and resting upon the lower end plug 34 is a stack of neutron absorbing pellets 38 made of a suitable material having a high neutron absorption cross-section, such as boron carbide, tantalum, a combination of silver-idium and cadmium, or one of many other commonly known materials. Resting upon the upper surface of the uppermost pellet 38, and slidable within the tube 30, is a load distributing spacer 40, preferably in the form of a disc, which has an axial bore 42 extending therethrough. Axially spaced above the disc-like spacer 40, and slidable within the tube 30 is a similar load distributing spacer 44 which likewise is preferably in the form of a disc and has an axial bore 46 therethrough. A coil spring 48 is interposed under compression between the spacers 40 and 44 to maintain the axially spaced relationship between the spacers in which the latter define therebetween a plenum chamber 50 for receiving the gases generated by the pellets 38 as they absorb neutrons in performing their intended function.

In the preferred embodiment, means in the form of a tubular insert 52 is interposed between and in abutment with the upper end plug 32 and the upper spacer 44. The tubular insert 52 defines an auxiliary chamber 54 and, being relatively rigid, reinforces the upper end portion of tube 30 against collapse due to implosion caused by external pressure. Moreover, the tubular insert 52 is of sufficient axial length to hold the spacer 44 in its proper spaced relationship with respect to the spacer 40 which maintains the coil spring 48 under compression.

Claim 3 sets out a particular embodiment by the invention.

From the above, it will be appreciated that gases generated by the neutron absorbing pellets 38 will flow into the plenum chamber 50 through the axial bore 42 of the spacer 40, and the gas expanding in the plenum chamber 50 will pass therefrom into the auxiliary chamber 54 through the axial bore 46 of the spacer 44. Thus, there is ample space for the gas to occupy, and consequently it is unlikely that the gas pressure within the control rod will ever reach a critical lever threatening rupture. Furthermore, the spacers 40 and 44 serve to distribute the force of the spring 48 so that there are no high contact stresses tending to damage the pellets 38.

It will be appreciated that the invention particularly described herein in conjunction with a control rod can be similarly applied also to nuclear fuel rods.

**Claims**

1. A rod assembly for use in a nuclear reactor, comprising a tubular cladding member (30) having end plugs (32, 34) which seal the tubular cladding member at the opposite ends thereof, and, disposed within the cladding member (30), a stack of neutron reactive pellets (38) supported, at one end of the stack, by the lower end plug (34) a pressure spring (48) biasing the stack of pellets (38) against said lower end plug (34), means (44) forming a spring seat which is positioned between the end of said pressure spring (48) and the upper end plug (32), and a slidable spring-load distributing member (40) disposed in abutment with the upper end of the stack of pellets (38), the space between the stack of pellets and the spring-seat forming means (44) defining a plenum chamber (50), characterized in that the space between the spring-seat forming means (44) and said upper end plug (32) defines an auxiliary chamber (54) which is in gas-flow communication with said plenum chamber (50), and that said tubular cladding member (30) has disposed therein a tubular insert (52) which is interposed between and in abutment with said upper end plug (32) and said upper spring seat means (44) and extends in reinforcing relationship with respect to the adjacent side wall of the cladding member.

2. A rod assembly according to claim 1, characterized in that said spring-load distributing member (40) is a disc-like member having a gas-flow passage (42) extending therethrough.

3. A rod assembly according to claim 1 or 2, characterized in that said tubular insert (52) defines a shoulder cooperating with said spring-seat forming means (44) to hold the latter in position against the pressure of said pressure spring (48).

4. A rod assembly according to any of claims 1 to 3, characterized in that said spring-seat forming means (44) is a disc-like member having a gas-flow passage (46) extending therethrough.

**Patentansprüche**

1. Stabbaugruppe zum Einsatz in einen Kernreaktor, mit einem rohrförmigen Hüllelement (30) mit Endkappen (32, 34), welche das rohrförmige Hüllelement an seinen beiden Enden verschließen, und mit einem innerhalb des Hüllelements (30) angeordneten Stapel von neutronenreaktiven Tabletten (38), der am einen Stapelende durch die untere Endkappe (34) abgestützt ist, wobei eine Druckfeder (48) den Tablettenstapel (38) gegen die untere Endkappe (34) vorspannt, weiter mit einen Federsitz bildenden Mitteln (44), die zwischen dem Ende der Druckfeder (48) und der oberen Endkappe (32) angeordnet sind, und mit einem verschiebbaren Federdruckverteilungselement (40), das in Anlage mit dem oberen Ende des Tablettenstapels (38) angeordnet ist, wobei der Raum zwischen dem Tablettenstapel und den Federsitz bildenden Mitteln (44) eine Sammelkammer (50) bildet,
dadurch gekennzeichnet, daß der Raum zwischen den federsitzbildenden Mitteln (44) und der oberen Endkappe (32) eine Hilfskammer (54) bildet, die in Gasströmungsverbindung mit der Sammelkammer (50) steht, und daß das rohrförmige Hüllelement (30) einen darin angeordneten rohrförmigen Einsatz (52) aufweist, der zwischen der oberen Endkappe (32) und den oberen Federsitzmitteln (44) angeordnet ist und damit in Anlage steht und in die angrenzende Seitenwand des Hüllelements verstärkender Weise verläuft.

2. Stabbaugruppe nach Anspruch 1, dadurch gekennzeichnet, daß das Federdruckverteilungselement (40) ein scheibenartiges Bauteil mit einem hindurchverlaufenden Gasströmungskanal (42) ist.

3. Stabbaugruppe nach Anspruch 1 oder 2, dadurch gekennzeichnet, daß der rohrförmige Einsatz (52) eine Schulter bildet, die mit den Federsitz bildenden Mitteln (44) zusammenwirkt, um die letzteren gegen den Druck der Druckfeder (48) in ihrer Position zu halten.

4. Stabbaugruppe nach einem der Ansprüche 1 bis 3, dadurch gekennzeichnet, daß die federsitzbildenden Mittel (44) durch ein scheibenförmiges Bauteil mit einem hindurchverlaufenden Gasströmungskanal (46) gebildet sind.

**Revendications**

1. Agencement de barre destiné à être utilisé dans un réacteur nucléaire, comprenant un organe tubulaire (30) formant gainage possédant des bouchons (32, 34) d'extrémité qui ferment d'une manière étanche l'organe tubulaire formant gainage aux extrémités opposées de ce dernier, et, disposé à l'intérieur de l'organe (30) formant gainage, un empilement de pastilles (38) réactives aux neutrons supportées, à une extrémité de l'empilement, par le bouchon (34) d'extrémité inférieure, un ressort (48) de compression poussant l'empilement de pastilles (38) contre ledit bouchon (34) d'extrémité inférieure, un moyen (44) constituant un siège de ressort qui est positionné entre l'extrémité dudit ressort (48) de compression et le bouchon (32) d'extrémité supérieure, et un organe (40) répartissant la charge du ressort et ayant la faculté de coulisser, disposé en butée sur l'extrémité supérieure de l'empilement de pastilles (38), l'espace situé entre l'empilement de pastilles et le moyen (44) qui constitue un siège de ressort définissant une chambre sous pression (50),
caractérisé en ce que l'espace situé entre le moyen (44) qui constitue un siège de ressort et ledit bouchon (32) d'extrémité supérieure définit une chambre auxiliaire (54) qui est en communication avec la chambre sous pression (50) pour un écoulement de gaz et que ledit organe tubulaire (30) formant gainage est pourvu d'une pièce rapportée tubulaire (52) disposée à l'intérieur de cet organe, qui est intercalée entre ledit bouchon (32) d'extrémité supérieure et ledit moyen (44) formant siège supérieur de ressort et qui bute contre ce bouchon et ce moyen et s'étend en vue de renforcer la paroi latérale adjacent de l'organe formant gainage.

2. Agencement de barre selon la revendication 1, caractérisé en ce que ledit organe (40) répartissant la charge du ressort est un organe semblable à un disque possédant un couloir (42) d'écoulement de gaz qui s'étend à travers lui.

3. Agencement de barre selon la revendication 1 ou la revendication 2, caractérisé en ce que ladite pièce rapportée tubulaire (52) forme un épaulement coopérant avec ledit moyen (44) constituant siège de ressort de manière à maintenir ce dernier en place à l'encontre de la pression dudit ressort (48) de compression.

4. Agencement de barre selon l'une quelconque des revendications 1 à 3, caractérisé en ce que ledit moyen (44) constituant siège de ressort est un organe semblable à un disque possédant un passage (46) d'écoulement de gaz qui s'étend à travers lui.

*Fig. 1*

## Fig. 2